# EUROPEAN PATENT SPECIFICATION

(11) **EP 3 869 320 B1**
(45) Date of publication and mention of the grant of the patent: **21.05.2025**
(21) Application number: 20158575.9
(22) Date of filing: 20.02.2020
(51) Int. Cl.: G06F 3/12, B41J 11/00, B41J 3/28

(54) **FLATBED PRINTER AND METHOD FOR PRINTING PRINT JOBS ON MEDIA PIECES PLACEABLE ON A FLATBED OF THE FLATBED PRINTER**
FLACHBETTDRUCKER UND VERFAHREN ZUM DRUCKEN VON DRUCKAUFTRÄGEN AUF MEDIENSTÜCKE, DIE AUF EINEM FLACHBETT DES FLACHBETTDRUCKERS PLATZIERBAR SIND
IMPRIMANTE À PLAT ET PROCÉDÉ POUR IMPRIMER DES TRAVAUX D'IMPRESSION SUR DES PIÈCES DE SUPPORT POUVANT ÊTRE PLACÉES SUR UN PLATEAU DE L'IMPRIMANTE À PLAT

(43) Date of publication of application: 25.08.2021
(73) Proprietor: Canon Production Printing Holding B.V., 5914 HH Venlo (NL)
(72) Inventor: GUERMONT, Jérôme O.R., 5914 HH Venlo (NL); IACOB, Violeta, 5914 HH Venlo (NL); VULPE, Radu, 5914 HH Venlo (NL); BADITA, Raul D., 5914 HH Venlo (NL); CHESNIOU, Andrei C., 5914 HH Venlo (NL); ALEXANDRU, Ioan M., 5914 HH Venlo (NL)
(74) Representative: Canon Production Printing IP Department

(56) References cited:
- WO-A1-2014/207007
- OC? USER MANUAL: "Oc? Arizona 550 GT User Manual, Version 1.2 Revision B", 1 January 2012 (2012-01-01), pages 69 - 106, XP055323517, Retrieved from the Internet <URL:https://dgs.oce.com/PrinterSupport/Arizona_550_Customer/Documents/User/Arizona550GT-XT_User_Manual_Rev-1.2-B_EN.pdf> [retrieved on 20161128]

## Description

### FIELD OF THE INVENTION

The invention relates to a flatbed printer comprising a flatbed area for placing at least one media piece to be printed upon, the flatbed area comprising a plurality of non-printing areas on which ejecting recording material is not allowed, but on which media piece placing is allowed, a print controller for receiving at least one print job comprising print data to be printed on the at least one media piece and controlling the printing of the at least one received print job on the at least one media piece, an armature constructed to move over the flatbed area in at least one direction, and a print head configured to eject recording material on the at least one media piece and attached to the armature, wherein the print controller is configured to receive a digital image intended to be printed by ejecting the recording material directly on the flatbed area.

The invention also relates to a method for placing at least one media piece on a flatbed area of a flatbed printer.

The invention further relates to a non-transitory recording medium comprising computer executable program code configured to instruct a computer to perform the method according to the invention.

The print head of the flatbed printer may be mounted on an armature above the flatbed area. The armature may a robot arm to which the print head is attached. The robot arm may move in a plurality of directions over the flatbed area. The armature may be a gantry moving over the flatbed area in a first direction, while the print head is movable along the gantry in a second direction perpendicular to the first direction. In case of a print head having a same width as the flatbed area, the armature may be moving in one direction over the flatbed area, i.e. the first direction. The control unit is connected to the print head for controlling the print head. The control unit is controlling the movement of the print head over the flatbed area and the ejection of recording material towards the flatbed area. The control unit is connected to the print head for controlling the print head height with respect to the flatbed area. The distance from the print head to the flatbed area may be variable in order to allow the printing of pieces of media of different thicknesses.

An example of such a flatbed printer is revealed in publication "Océ Arizona 550 GT User Manual", Version 1.2, Revision B of 1 January 2021, and in patent application WO 2014/207007.

The recording material may be ink, e.g. a UV curable ink. When a UV curable ink is used, the print head is also provided with UV lamps for curing the recording material when ejected on the piece of media placed on the flatbed area. The flatbed area usually has the form of a rectangle, for example of a width of 1.22 m and a length of 1.22 m, or of a width of 1.22 m and a length of 2.44 m.

A piece of media with dimensions smaller or equal to the dimensions of the flatbed area can be placed on the flatbed area. Even a piece of media with dimensions larger than the dimensions of the flatbed area can be placed on the flatbed area and has to be moved to get it completely printed.

Flatbed print systems usually apply recording material, like colorants, on a piece of media placed on the flatbed area in the form of ink according to a digitally defined, two-dimensional pattern of pixels with values that indicate a composition of these colorants. This pattern is generated out of a digital image, that may comprise objects in either vectorized or rasterized format, using conventional techniques like interpretation, rendering, and screening by a raster image processor. The processing of a digital image includes colour management to convert colour values of the pixels in the digital image into composition values related to the printer colour space as is set up by the colorants of the print system. Depending on the intended print quality a print mode may be selected to influence the characteristics of the print process. According to the selected print mode the pixels of the pattern may be printed in a corresponding resolution and in more than one pass, wherein a position of the piece of media on the flatbed area has an opportunity to receive a colorant in one or more of the passes of the print head across the flatbed area. An image to be printed may be delivered to the flatbed printer comprised in a print job which may be submitted by a user or an operator from a work station coupled to the flatbed printer via a digital network connection.

Print jobs may also contain images which have to be printed in multiple layers. For example a first white layer is deposited as a background, a second colour layer is deposited as a colour image to be established and a third varnish layer is deposited in order to protect the second layer.

### BACKGROUND OF THE INVENTION

An operator may place one or more pieces of media on the flatbed area in order to print images from a plurality of print jobs on the one or more pieces according to digital images which have been offered to the control unit by means of submitted print jobs. Positioning of a piece of media must be done very accurate with respect to its position and orientation. The operator usually measures right-angled distances of the piece of media from the edges of the flatbed area by a measuring tool like a measuring cord, a tape-measure or a ruler. The operator enters the measured distances by means of an application running on a computer connected to the control unit of the flatbed printer or on the print controller itself. After entering the distances, the operator selects the digital image to be printed on the piece of media and start the printing of the flatbed printer. Therefore the print controller or the computer is provided with a user interface suitable for data entry in general.

Another method to position the media is to align the piece of media with reference rulers which have been printed on the flatbed area beforehand. Another usage of directly printing on the flatbed area is for highlighting vacuum zones which are underneath the surface of the flatbed area so that the operator knows what areas to use, mask, or turn on or off. A vacuum zone is connected to a plurality of suction holes in the flatbed area.

The flatbed area comprises non-printing areas on which ejecting recording material is not allowed, but on which media piece placing is allowed. For example, a suction hole for sucking the media pieces to the flatbed area is a non-printing area. For example a hole for a registration pin is a non-printing area. For example, a seam by which two parts of the flatbed area are fastened or welded to each other may be a non-printing area.

A suction hole is a hole in the flat bed for sucking the media pieces to the flat bed surface to avoid displacement of the media piece over the flat bed surface. When cutting a jig on a rigid media, the jig needs some holes in the back of the jig that allows air to pass through.

A registration pin is put in a hole in the flatbed area in order to place the media piece against at least one registration pin to align the media piece.

The print controller according to the invention is configured to receive a digital image intended to be printed by ejecting the recording material directly on the flatbed area. This means that the flatbed area is not covered with other material like paper sheets, but the recording material is ejected directly on the flatbed area itself.

In one example, outlines of the media pieces are printed directly on the flatbed area. Especially in the case that a print shop prints a same job repeatedly, it is useful to print the outlines of the media pieces directly on the flatbed area. This method is easier than cutting a jig on a rigid media, since the jig needs holes on the back side that allows vacuum air to pass through.

A drawback of this method is that the flatbed area has to be cleaned each time a container job is printed. A container job is a print job that contains as many images as can be printed on the media pieces placed in one gang of media pieces laid down on the flatbed area. Another drawback is that by printing on the flatbed area, recording material - even uncured - will clog in or into to non-printing areas.

According to European Patent EP3090877 substrate alignment tabs are printed directly on the print surface. Additionally it is assured that it is not attempted to print an alignment tab at a position of a suction hole. This way of working is a restrictive way of working for the planning of images to be printed. For example, the larger the number of suction holes, the greater the restriction for the planning of the alignment tabs. Moreover, in case of a very large number of suction holes in combination with an arbitrarily shaped media piece, it could become impossible to avoid printing of an alignment tab at a position of a suction hole.

It is an object of the invention to achieve a method to mitigate the above-mentioned drawbacks of printing a received digital image directly on the flatbed area.

### SUMMARY OF THE INVENTION

According to the present invention this object is achieved a flatbed printer according to claim 1.

According to an embodiment a non-printing area out of the plurality of non-printing areas comprises at least one suction hole out of a plurality of suction holes, at least one registration pin out of a plurality of registration pins, and/or at least one seam by which two parts of the flatbed area are seamed.

According to an embodiment the digital image is a registration image to be used for registering a media piece on the flatbed area.

According to an embodiment the registration image is a line image according to which a media piece is aligned on the flatbed area.

According to an embodiment the registration image is at least part of an outline of a media piece.

According to an embodiment the print controller is configured to select a digital map of the non-printing areas in the flatbed area and overlap the digital map with the digital image in order to determine environments of the non-printing areas to which environments it is prohibited to eject recording material.

According to an embodiment the print controller is configured to set and adapt a system parameter defining at least one dimension of an environment of a non-printing area.

According to an embodiment the flatbed printer comprises a user interface which is configured to display on a digital window a digital representation of the flatbed area which comprises a digital representation of the non-printing areas and at least one entry box for entering the at least one dimension of an environment of a non-printing area of the plurality of non-printing areas.

According to an embodiment the user interface is configured to display a representation of a media piece on the digital window and to allow a user operation of dragging and dropping the representation of the media piece on the digital representation of the flatbed area in order to reduce a number of the environments to be determined.

According to an embodiment the print controller is configured to use an automatic nesting option for nesting images of the at least one print job, and the automatic nesting option is configured to minimize a number of the environments to be determined.

The present invention also relates to a printing method for a flatbed printer according to claim 10.

According to an embodiment a non-printing area out of the plurality of non-printing areas comprises at least one suction hole out of a plurality of suction holes, at least one registration pin out of a plurality of registration pins, and/or at least one seam by which two parts of the flatbed area are seamed.

According to an embodiment the method comprises the steps of selecting a digital map of the non-printing areas in the flatbed area and overlapping the digital map with the digital image in order to determine environments of the non-printing areas.

According to an embodiment the method comprises the step of automatically nesting images of the at least one print job by placing the nested images in such a way that a number of non-printing areas which coincide with parts of outlines of the nested images is minimized.

The present invention also relates to a non-transitory recording medium according to claim 14.

Further scope of applicability of the present invention will become apparent from the detailed description given hereinafter. However, it should be understood that the detailed description and specific examples, while indicating preferred embodiments of the invention, are given by way of illustration only, since various changes and modifications within the scope of the invention will become apparent to those skilled in the art from this detailed description.

### BRIEF DESCRIPTION OF THE DRAWINGS

Hereinafter the present invention is further elucidated with references to the appended drawings showing non-limiting embodiments and wherein:
Fig. 1 shows a printing system according to the invention;
Fig. 2 - 6 are top views of a flatbed area of the printing system in Fig. 1 showing the non-printing areas according to the present invention;
Fig. 7 is a schematic diagram of an embodiment of the method according to the invention;
Fig. 8 shows some additional steps to the embodiment of the method shown in Fig. 7; and
Fig. 9 shows a user interface window according to the present invention.

### DETAILED DESCRIPTION OF EMBODIMENTS

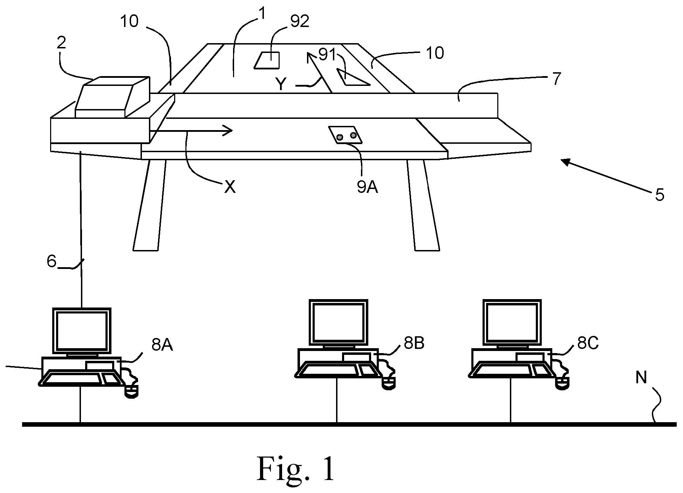

Fig. 1 is a print system 5 comprising a number of workstations 8B, 8C, which may be personal computers or other devices for preparing image data for prints to be printed. These workstations have access to a network N for transferring print jobs comprising the image data to a print controller 8A that is configured to receive the print jobs for prints and derive pass images. The print controller 8A may be part of the print system 5 connected to a print controller of the print system 5 via a connection 6. The print system 5 further comprises a print head 2 attached to an armature 7 for applying colorants, for example cyan (C), magenta (M), yellow (Y), black (K) and white (W) colorant, or varnish to pieces 91, 92, 9A of flat print media placed on a flatbed area 1 in order to obtain a printed image. The armature 7 may a gantry above the flatbed area 1 as shown in Fig. 1 or a robot arm (not shown) moving in a plurality of directions over the flatbed area 1. The flatbed area 1 is the surface of the flatbed which is at least partially printable by the print head 2. At least one media piece may be placed on the flatbed area 1. The pieces of media may be so small that they are completely placed on the flatbed area 1, but a piece of media which is larger than the flatbed area, in which case an image which is going to cover the whole piece of media must be printed into a plurality of parts of the image, is not excluded. A first piece 9A has already been printed upon, while the other pieces 91, 92 are not provided with any recording material yet. The print head 2 reciprocally scans the flatbed area 1 in the second direction X along a gantry 7 perpendicular to a first direction Y of the gantry 7 over the flatbed area 1 along guiding parts 10. During printing of an image on the piece 91, 92, 9A of media, the piece 91, 92, 9A of media is not moved on the flatbed area 1. This way of working is advantageous for rigid print media. A print head which is as wide as the flatbed area may also be envisaged within the scope of the invention. Such a print head may be moveable in at least one direction over the flatbed area 1. The piece of media 9A may have a thickness of 10 mm, while the pieces of media 91, 92 may have a thickness of 20 mm.

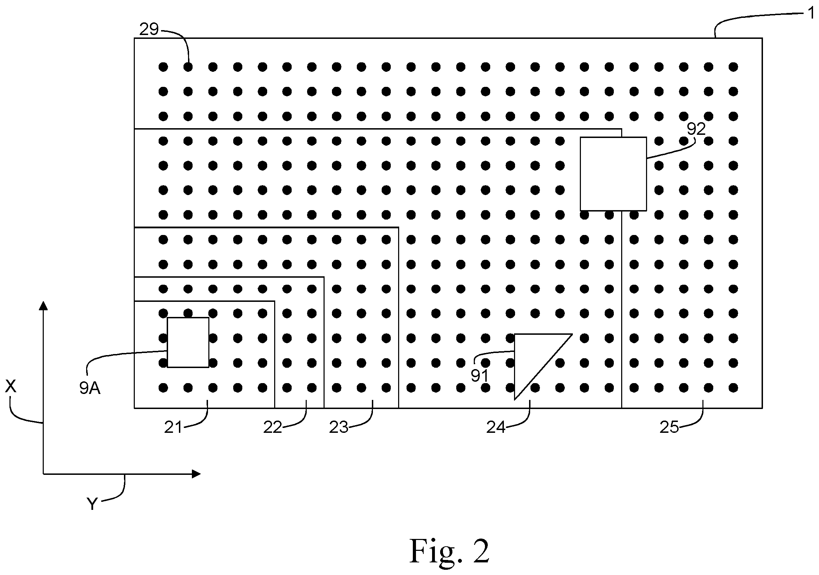

Fig. 2 shows the flatbed area 1 of Fig.1 from a different viewpoint. The flatbed area 1 is provided with a plurality of suction holes 29. A suction hole 29 is connected to at least one underlying suction chamber 21 - 25. The suction chambers 21 - 25 may be closed and opened separately in order to limit and/or expand the air flow to an air flow which is necessary and corresponding to the positions of the media pieces 91, 92, 9A on the flatbed area 1. The number of suction holes, the number of suction chambers, the size of the suction holes, the size of the suction chambers, the geometry of the suction holes and the geometry of the suction chambers in Fig. 2 are exemplary. Other numbers, sizes or geometries may be envisioned.

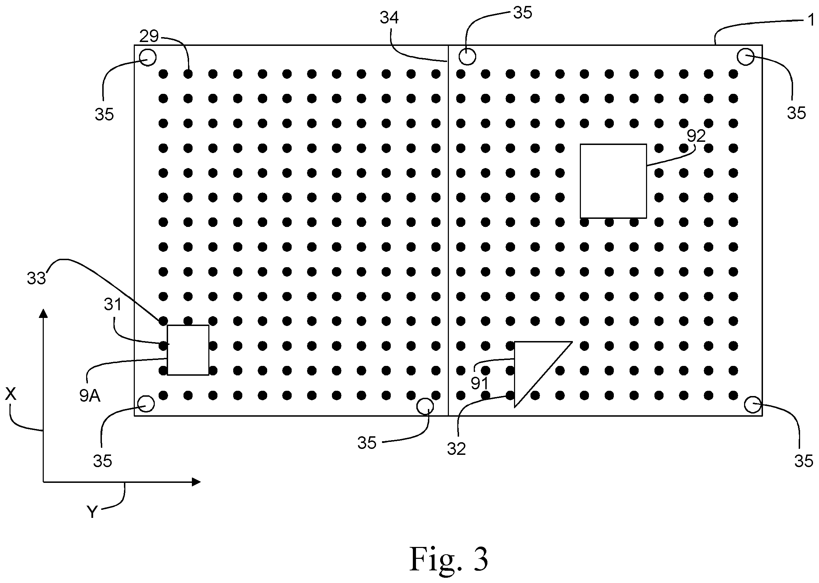

Fig. 3 shows the flatbed area 1 of Fig. 1 again. Indicated are suction holes 31, 32 which coincide with a border of the media pieces 9A, 91 respectively, i.e. with an outline of the media pieces 9A, 91 respectively. The print controller 8A shown in Fig. 1 schedules the images to be printed on the media pieces 9A, 91 at their positions on the flatbed area 1.

Indicated are holes 35 to put registration pins in in order to align media pieces. The number of registration pin holes, the size of the registration pin holes and the geometry of the registration pin holes in Fig. 3 are exemplary. Other numbers, sizes or geometries may be envisioned.

At least one a seam 34 is indicated which connects a left side part of the flatbed area 1 with a right side part of the flatbed area 1. The number of seams, the size and direction of the seams and the geometry of the seams in Fig. 3 are exemplary. Other numbers, sizes or geometries may be envisioned.

In Fig. 3 three media pieces 9A, 91, 92 as shown, but any other number of media pieces larger than or equal to 1 may be envisioned.

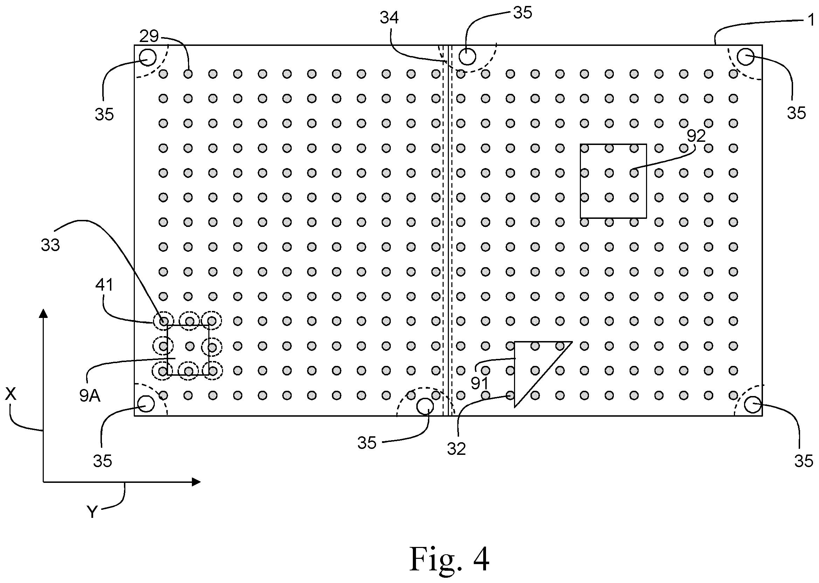

Fig. 4 shows the flatbed area 1 of Fig. 1 again. The print controller 8A has identified the suction holes coinciding with a border of a media piece 9A, 91, 92. Before placing the media pieces 9A, 91, 92 at the scheduled position, the print controller 8A determines for each suction hole in the flatbed area 1 or least for the suction holes which are covered or nearly covered by at least part of the ejected recording material when the outlines of the media pieces 9A, 91, 92 would be directly printed on the flatbed area 1, an environment of and including the suction hole. For example an environment 41 is determined for suction hole 33. The outline of media piece 9A coincides with 8 suction holes resulting in 8 environments to be determined by the print controller 8A.

Indicated with two dashed lines parallel to the seam 34 is an environment for the seam 34. Indicated with dashed quarter circles or dashed semi circles are environments for the registration pin holes 35. The number, the size and the geometry of the environments Fig. 4 are exemplary. Other numbers, sizes or geometries may be envisioned.

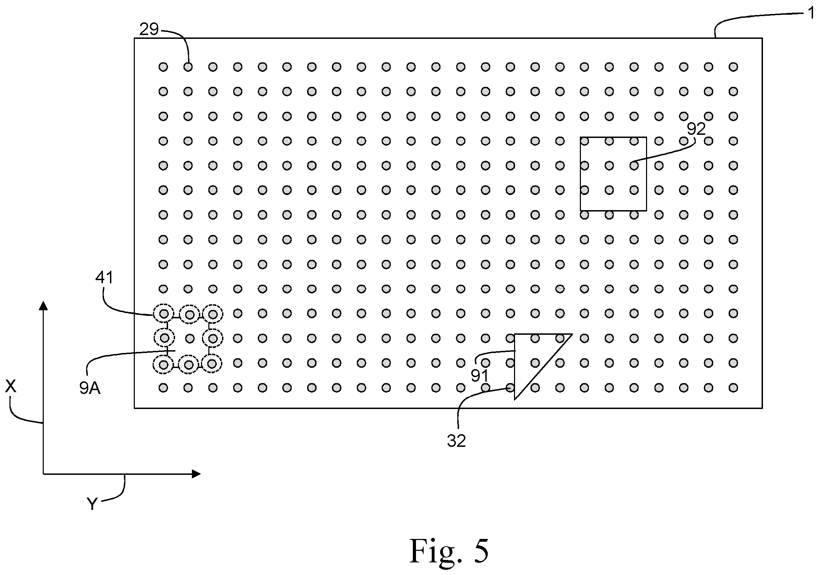

Fig. 5 shows the flatbed area 1 of Fig. 1 again. For convenience reasons the environments 41 of media piece 9A are considered. The environments of media pieces 91 and 92 are treated in a similar way. Since the environments 41 of media piece 9A have been determined, the print controller 8A determines which line pieces or curve pieces of the outline of the media piece 9A must be printed and which line pieces or curve pieces of the outline of the media piece 9A must not be printed. In Fig. 5 the line pieces which should not be printed are not shown - which are actually the line pieces which overlap with the environments 41 - and the line pieces which should be printed are shown. For example, the environments 41 are now cleared from line pieces. Whether line pieces or curve pieces are to be considered, depends on the outline of the media piece. Since the media piece 9A has a rectangular outline, line pieces will be considered. Since the media piece may have an arbitrary outline, other pieces than line pieces, for example curve pieces may be considered.

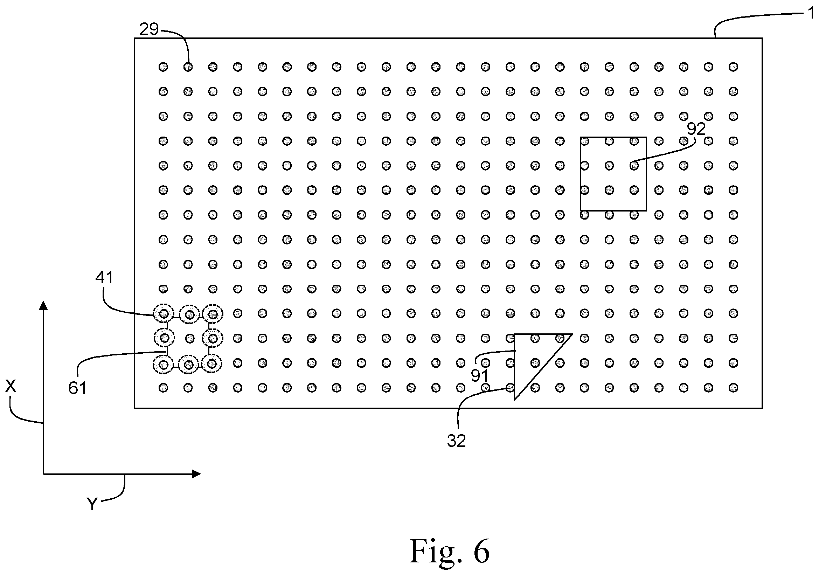

Fig. 6 shows the flatbed area of Fig. 1 again. The environments are not shown any more in order to give a clear overview of what line pieces of the outline of media piece 9A will be printed directly on the flatbed area 1. For example, line piece 61 is printed directly on the flatbed area 1. There will be 8 line pieces printed directly on the flatbed area 1 to form a "dashed" outline of the media piece 8A.

The examples shown in Fig. 2 - 6 may be expanded to media pieces 91 and 92. The shapes of the media pieces 9A, 91, 92 is arbitrarily chosen, but may be of an arbitrary shape.

In general the print controller is configured to not print any recording material in the non-printing areas in order to avoid pollution with uncured recording material or with cured recording material which is difficult to remove from the flatbed area, from the suction holes, from the registration pin holes and from the seam valley.

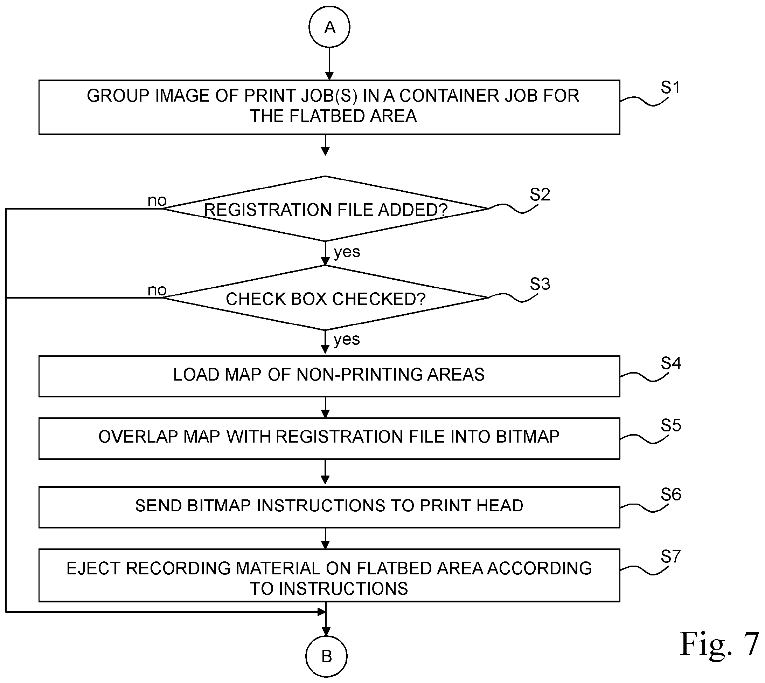

Fig. 7 shows a flow diagram of an embodiment of the method according to the invention. Starting point of the method is point A. Point A leads to a first step S1.

In the first step S1 the plurality of print jobs is automatically grouped into a plurality of consecutive container jobs. Each container job comprises a group of print jobs for which media pieces are intended to be laid down on the flatbed area for printing the group of print jobs on the media pieces in one print batch. The automatic grouping of the plurality of print jobs into the plurality of consecutive container jobs comprises the steps of gathering the group of print jobs for a container job due to the print job characteristics of each of the plurality of print jobs and/or the flat bed characteristics of the flatbed printer.

In a second step S2 the print controller checks if a registration job has been added to the container job which comprises least one image to be printed. The registration job comprises a registration file which is used as an outline of the media pieces on which the at least one image is intended to be printed. The registration job contains a type of registration, for example rectangle, star-shaped, triangle, full image, etc.

If a registration job is added, the method proceeds to a third step S3. Otherwise the method proceeds to an end point B of the method.

In the third step S3 the print controller checks if a check box labeled "Print on Table" is checked. If the checkbox is checked, the method proceeds to a fourth step S4. Otherwise the method proceeds to the end point B of the method.

In the fourth step S4 the print controller loads a first digital map of the non-printing areas in the flatbed area from memory. The first digital map also comprises the determined environments circumventing the non-printing areas according to the invention.

In a fifth step S5 the print controller overlaps the first digital map with the registration file and applies all print job settings to it, like rotation, flip, offsets, etc., resulting in a digital bitmap.

In a sixth step S6 the print controller sends instructions derived from the resulting digital bitmap to the print head.

In a seventh step S7 the print head ejects the recording material directly on the flatbed area according to the digital bitmap.

The method ends in an end point B.

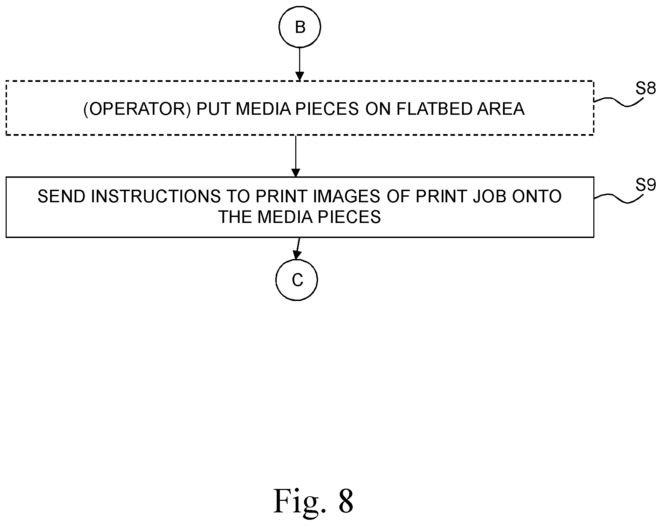

Fig. 8 shows some additional steps after applying the method according to the present invention, i.e. steps after the end point B.

In an eighth step S8 the operator puts the media pieces on the flatbed area aligned with the printed "dashed" outlines which are printed according to the digital bitmap. The eighth step S8 is a manual step executed by an operator as indicated by the dashed rectangle of the eighth step S8 in Fig. 8.

In a ninth step S9 the print controller sends instructions to the print head to print the images of the print job on the media pieces placed on the flatbed area.

After the ninth step S9 the method ends in an end point C.

According to an embodiment the print controller gets feedback from via the user interface of the printing system or via detection by sensors of the printing system that the media pieces have been laid down on the flatbed area in the eighth step S8, before the next step S9 is started. The ninth step S9 may be started automatically by the print controller or manually via the user interface by the operator.

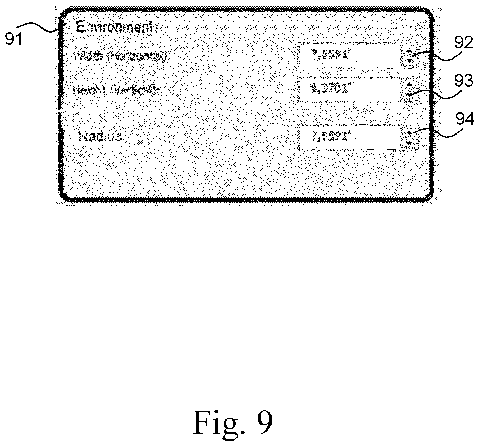

Fig. 9 shows a user interface window of the user interface of the flatbed printer according to the present invention. The user interface may be a local user interface attached to the flatbed printer. The user interface may be residing in a computer, PC, laptop, tablet pc, mobile phone, or any other mobile device with a display screen connected - wired or wireless - to the print controller of the flatbed printer.

According to an embodiment the flatbed printer comprises a user interface which is configured to display on a digital window a digital representation of the flatbed area which comprises a digital representation of the non-printing areas and at least one entry box for entering the at least one dimension of an environment of a non-printing area of the plurality of non-printing areas. The print controller is configured to set and adapt a system parameter defining at least one dimension of an environment of a non-printing area. The user interface comprises a user interface window with at least one entry box for entering the at least one dimension of an environment of a non-printing area of the plurality of non-printing areas. For example, in Fig. 9 a user interface window 91 is shown with an entry field 92 for setting a width of the environment according to the invention, an entry field 93 for setting a height of the environment according to the invention, and an entry field 94 for setting a radius of an environment according to the invention.

According to an embodiment the user interface is configured to display a representation of a media piece on a user interface window and to allow a user operation of dragging and dropping the representation of the media piece on the digital representation of the flatbed area in order to reduce a number of the environments to be determined.

The above disclosure is intended as merely exemplary, and not to limit the scope of the invention, which is to be determined by reference to the following claims.

## Claims

1. Flatbed printer comprising
- a flatbed area for placing at least one media piece to be printed upon, the flatbed area comprising a plurality of non-printing areas on which ejecting recording material is not allowed, but on which media piece placing is allowed,
- a print controller for receiving at least one print job comprising print data to be printed on the at least one media piece and controlling the printing of the at least one received print job on the at least one media pieces,
- an armature constructed to move over the flatbed area in at least one direction, and
- a print head configured to eject recording material on the at least one media piece and attached to the armature,
wherein
the print controller is configured
to receive a digital image intended to be printed by ejecting the recording material directly on the flatbed area,
to determine - before printing of the received digital image - for each non-printing area in the flatbed area which is covered by at least part of the ejected recording material when the digital image is directly printed on the flatbed area, an environment of and including the non-printing area, and
the print head is configured
to eject the recording material directly on the flatbed area according to the digital image except in each environment determined by the print controller.

2. Flatbed printer according to claim 1, wherein the digital image is a registration image to be used for registering the at least one media piece on the flatbed area.

3. Flatbed printer according to claim 2, wherein the registration image is a line image according to which a media piece is aligned on the flatbed area.

4. Flatbed printer according to claim 2 or 3, wherein the registration image is at least part of an outline of a media piece.

5. Flatbed printer according to any of the preceding claims, wherein the print controller is configured to select a digital map of the non-printing areas in the flatbed area and overlap the digital map with the digital image in order to determine environments of the non-printing areas to which environments it is prohibited to eject recording material.

6. Flatbed printer according to any of the preceding claims, wherein the print controller is configured to set and adapt a system parameter defining at least one dimension of an environment of a non-printing area.

7. Flatbed printer according to claim 6, wherein the flatbed printer comprises a user interface which is configured to display on a digital window a digital representation of the flatbed area which comprises a digital representation of the non-printing areas and at least one entry box for entering the at least one dimension of an environment of a non-printing area of the plurality of non-printing areas.

8. Flatbed printer according to claim 7, wherein the user interface is configured to display a representation of a media piece on the digital window and to allow a user operation of dragging and dropping the representation of the media piece on the digital representation of the flatbed area in order to reduce a number of the environments to be determined.

9. Flatbed printer according to any of the preceding claims, wherein the print controller is configured to use an automatic nesting option for nesting images of the at least one print job, and the automatic nesting option is configured to minimize a number of the environments to be determined.

10. Printing method for a flatbed printer comprising a flatbed area for placing at lest one media piece to be printed upon, the flatbed area comprising a plurality of non-printing areas on which ejecting recording material is not allowed, but on which media piece placing is allowed, a print controller for receiving at least one print job comprising print data to be printed on the at least one media piece and controlling the printing of the at least one received print job on the at least one media piece, a user interface, an armature constructed to move over the flatbed area in at least one direction, and a print head configured to eject recording material on the at least one media piece and attached to the armature,
wherein the method comprises the steps of
the print controller receiving a digital image intended to be printed by ejecting the recording material directly on the flatbed area,
the print controller determining - before printing of the received digital image - for each non-printing area in the flatbed area which is covered by at least part of the ejected recording material when the digital image is directly printed on the flatbed area, an environment of and including the non-printing area, and
the print head ejecting the recording material directly on the flatbed area according to the digital image except in each environment determined by the print controller.

11. Method according to claim 10, wherein a non-printing area out of the plurality of non-printing areas comprises at least one suction hole out of a plurality of suction holes, at least one registration pin out of a plurality of registration pins, and/or at least one seam by which two parts of the flatbed area are seamed.

12. Method according to claim 11, wherein the method comprises the steps of selecting a digital map of the non-printing areas in the flatbed area and overlapping the digital map with the digital image in order to determine environments of the non-printing areas.

13. Method according to any of the claims 10 - 12, wherein the method comprises the step of automatically nesting images of the at least one print job by placing the nested images in such a way that a number of non-printing areas which coincide with parts of outlines of the nested images is minimized.

14. Non-transitory recording medium comprising computer executable program code instructions which, when executed by a computer, cause the computer to perform the method according to any of the claims 10 - 13.

## Patentansprüche

1. Flachbettdrucker, bestehend aus
- einen Flachbettbereich zum Auflegen mindestens eines zu bedruckenden Mediums, wobei der Flachbettbereich eine Vielzahl von nicht druckenden Bereichen umfasst, auf denen das Auswerfen von Aufzeichnungsmaterial nicht erlaubt ist, auf denen aber das Auflegen von Medienteilen erlaubt ist,
- eine Drucksteuerung zum Empfangen mindestens eines Druckauftrags, der Druckdaten enthält, die auf das mindestens eine Medienteil zu drucken sind, und zum Steuern des Druckens des mindestens einen empfangenen Druckauftrags auf das mindestens eine Medienteil,
- eine Armatur, die so konstruiert ist, dass sie sich in mindestens einer Richtung über den Flachbettbereich bewegt, und - einen Druckkopf, der so konfiguriert ist, dass er Aufzeichnungsmaterial auf das mindestens eine Medienteil auswirft und an der Armatur befestigt ist,
wobei
der Druckcontroller konfiguriert ist
zum Empfang eines digitalen Bildes, das gedruckt werden soll, indem das Aufnahmematerial direkt auf den Flachbettbereich ausgeworfen wird,
vor dem Drucken des empfangenen digitalen Bildes für jeden nicht druckenden Bereich in dem Flachbettbereich, der von mindestens einem Teil des ausgeworfenen Aufzeichnungsmaterials bedeckt ist, wenn das digitale Bild direkt auf dem Flachbettbereich gedruckt wird, eine Umgebung des nicht druckenden Bereichs zu bestimmen, die diesen einschließt, und
der Druckkopf konfiguriert ist
um das Aufnahmematerial entsprechend dem digitalen Bild direkt auf den Flachbettbereich auszuwerfen, außer in jeder vom Druck-Controller bestimmten Umgebung.

2. Flachbettdrucker nach Anspruch 1, wobei das digitale Bild ein Ausrichtungsbild ist, das für die Ausrichtung des mindestens einen Medienteils auf dem Flachbettbereich verwendet wird.

3. Flachbettdrucker nach Anspruch 2, wobei das Registrierbild ein Linienbild ist, nach dem ein Medienteil auf dem Flachbettbereich ausgerichtet wird.

4. Flachbettdrucker nach Anspruch 2 oder 3, wobei das Registrierbild zumindest ein Teil eines Umrisses eines Medienteils ist.

5. Flachbettdrucker nach einem der vorhergehenden Patentansprüche, wobei die Drucksteuerung so konfiguriert ist, dass sie eine digitale Karte der nicht druckenden Bereiche im Flachbettbereich auswählt und die digitale Karte mit dem digitalen Bild überlagert, um die Umgebungen der nicht druckenden Bereiche zu bestimmen, in welche Umgebungen kein Aufzeichnungsmaterial ausgeworfen werden darf.

6. Flachbettdrucker nach einem der vorhergehenden Patentansprüche, wobei die Drucksteuerung so konfiguriert ist, dass sie einen Systemparameter, der mindestens eine Dimension einer Umgebung eines nicht druckenden Bereichs definiert, einstellt und anpasst.

7. Flachbettdrucker nach Anspruch 6, wobei der Flachbettdrucker eine Benutzerschnittstelle umfasst, die so konfiguriert ist, dass sie auf einem digitalen Fenster eine digitale Darstellung des Flachbettbereichs anzeigt, die eine digitale Darstellung der nichtdruckenden Bereiche und mindestens ein Eingabefeld für die Eingabe der mindestens einen Dimension einer Umgebung eines nichtdruckenden Bereichs der Vielzahl von nichtdruckenden Bereichen umfasst.

8. Flachbettdrucker nach Anspruch 7, wobei die Benutzerschnittstelle so konfiguriert ist, dass sie eine Darstellung eines Medienteils auf dem digitalen Fenster anzeigt und eine Benutzeroperation des Ziehens und Ablegens der Darstellung des Medienteils auf der digitalen Darstellung des Flachbettbereichs ermöglicht, um eine Anzahl der zu ermittelnden Umgebungen zu reduzieren.

9. Flachbettdrucker nach einem der vorhergehenden Patentansprüche, wobei die Drucksteuerung so konfiguriert ist, dass sie eine automatische Verschachtelungsoption zum Verschachteln von Bildern des mindestens einen Druckauftrags verwendet, und die automatische Verschachtelungsoption so konfiguriert ist, dass sie eine Anzahl der zu ermittelnden Umgebungen minimiert.

10. Druckverfahren für einen Flachbettdrucker mit einem Flachbettbereich zum Auflegen mindestens eines zu bedruckenden Medienteils, wobei der Flachbettbereich eine Vielzahl von nicht druckenden Bereichen umfasst, auf denen das Auswerfen von Aufzeichnungsmaterial nicht erlaubt ist, auf denen aber das Auflegen von Medienteilen erlaubt ist, eine Drucksteuerung zum Empfangen mindestens eines Druckauftrags, der Druckdaten umfasst, die auf das mindestens eine Medienteil zu drucken sind, und zum Steuern des Druckens des mindestens einen empfangenen Druckauftrags auf das mindestens eine Medienteil, eine Benutzerschnittstelle, eine Armatur, die so konstruiert ist, dass sie sich in mindestens einer Richtung über den Flachbettbereich bewegt, und einen Druckkopf, der so konfiguriert ist, dass er Aufzeichnungsmaterial auf das mindestens eine Medienteil auswirft und an der Armatur befestigt ist,
wobei das Verfahren die folgenden Schritte umfasst
die Drucksteuerung ein digitales Bild empfängt, das durch Auswerfen des Aufnahmematerials direkt auf den Flachbettbereich gedruckt werden soll,
die Drucksteuerung vor dem Drucken des empfangenen digitalen Bildes für jeden nicht druckenden Bereich in dem Flachbettbereich, der von mindestens einem Teil des ausgeworfenen Aufzeichnungsmaterials bedeckt ist, wenn das digitale Bild direkt auf dem Flachbettbereich gedruckt wird, eine Umgebung des nicht druckenden Bereichs bestimmt, die diesen einschließt, und
der Druckkopf das Aufnahmematerial entsprechend dem digitalen Bild direkt auf den Flachbettbereich auswirft, außer in jeder von der Drucksteuerung bestimmten Umgebung.

11. Verfahren nach Anspruch 10, wobei ein nicht-druckender Bereich aus der Vielzahl der nicht-druckenden Bereiche mindestens ein Saugloch aus einer Vielzahl von Sauglöchern, mindestens einen Passstift aus einer Vielzahl von Passstiften und/oder mindestens eine Naht umfasst, durch die zwei Teile des Flachbettbereichs gesäumt werden.

12. Verfahren nach Anspruch 11, wobei das Verfahren die Schritte des Auswählens einer digitalen Karte der nichtdruckenden Bereiche im Flachbettbereich und des Überlappens der digitalen Karte mit dem digitalen Bild umfasst, um Umgebungen der nichtdruckenden Bereiche zu bestimmen.

13. Verfahren nach einem der Patentansprüche 10 - 12, wobei das Verfahren den Schritt des automatischen Verschachtelns von Bildern des mindestens einen Druckauftrags umfasst, indem die verschachtelten Bilder so platziert werden, dass eine Anzahl von nicht druckenden Bereichen, die mit Teilen von Umrissen der verschachtelten Bilder übereinstimmen, minimiert wird.

14. Nicht-transitorisches Aufzeichnungsmedium, das computerausführbare Programmcode-Befehle enthält, die, wenn sie von einem Computer ausgeführt werden, den Computer veranlassen, das Verfahren nach einem der Patentansprüche 10 - 13 durchzuführen.

## Revendications

1. Imprimante à plat comprenant
- une zone à plat pour placer au moins un support à imprimer, la zone à plat comprenant une pluralité de zones de non-impression sur lesquelles l'éjection du matériel d'enregistrement n'est pas autorisée, mais sur lesquelles le placement des supports est autorisé,
- un contrôleur d'impression pour recevoir au moins un travail d'impression comprenant des données d'impression à imprimer sur au moins un support et pour contrôler l'impression d'au moins un travail d'impression reçu sur au moins un support,
- une armature conçue pour se déplacer sur le plateau dans au moins une direction, et
- une tête d'impression configurée pour éjecter le matériau d'enregistrement sur l'au moins un support et fixée à l'armature,
dans lequel
le contrôleur d'impression est configuré
pour recevoir une image numérique destinée à être imprimée en éjectant le matériau d'enregistrement directement sur la surface plane,
déterminer - avant l'impression de l'image numérique reçue - pour chaque zone non imprimable de la zone à plat qui est couverte par au moins une partie du matériau d'enregistrement éjecté lorsque l'image numérique est directement imprimée sur la zone à plat, un environnement de et comprenant la zone non imprimable, et
la tête d'impression est configurée
d'éjecter le matériau d'enregistrement directement sur la surface plane en fonction de l'image numérique, sauf dans chaque environnement déterminé par le contrôleur d'impression.

2. Imprimante à plat selon la revendication 1, dans laquelle l'image numérique est une image de repérage à utiliser pour le repérage de l'au moins une pièce de support sur la zone à plat.

3. Imprimante à plat selon la revendication 2, dans laquelle l'image d'enregistrement est une image de ligne selon laquelle une pièce de média est alignée sur la zone à plat.

4. Imprimante à plat selon la revendication 2 ou 3, dans laquelle l'image de repérage est au moins une partie d'un contour d'une pièce de média.

5. Imprimante à plat selon l'une quelconque des revendications précédentes, dans laquelle le contrôleur d'impression est configuré pour sélectionner une carte numérique des zones non imprimables dans la zone à plat et superposer la carte numérique avec l'image numérique afin de déterminer les environnements des zones non imprimables dans lesquels il est interdit d'éjecter le matériel d'enregistrement.

6. Imprimante à plat selon l'une quelconque des revendications précédentes, dans laquelle le contrôleur d'impression est configuré pour définir et adapter un paramètre système définissant au moins une dimension d'un environnement d'une zone de non-impression.

7. Imprimante à plat selon la revendication 6, dans laquelle l'imprimante à plat comprend une interface utilisateur qui est configurée pour afficher sur une fenêtre numérique une représentation numérique de la zone à plat qui comprend une représentation numérique des zones non imprimantes et au moins une zone de saisie pour saisir l'au moins une dimension d'un environnement d'une zone non imprimante de la pluralité de zones non imprimantes.

8. Imprimante à plat selon la revendication 7, dans laquelle l'interface utilisateur est configurée pour afficher une représentation d'une pièce de média sur la fenêtre numérique et pour permettre une opération utilisateur de glisser-déposer de la représentation de la pièce de média sur la représentation numérique de la zone à plat afin de réduire un nombre des environnements à déterminer.

9. Imprimante à plat selon l'une quelconque des revendications précédentes, dans laquelle le contrôleur d'impression est configuré pour utiliser une option d'imbrication automatique pour l'imbrication des images de l'au moins un travail d'impression, et l'option d'imbrication automatique est configurée pour minimiser un nombre d'environnements à déterminer.

10. Méthode d'impression pour une imprimante à plat comprenant une zone à plat pour placer au moins un support à imprimer, la zone à plat comprenant une pluralité de zones de non-impression sur lesquelles l'éjection de matériel d'enregistrement n'est pas autorisée, mais sur lesquelles le placement de supports est autorisé, un contrôleur d'impression pour recevoir au moins un travail d'impression comprenant des données d'impression à imprimer sur au moins un support et pour contrôler l'impression d'au moins un travail d'impression reçu sur au moins un support, une interface utilisateur, une armature conçue pour se déplacer sur la zone à plat dans au moins une direction, et une tête d'impression configurée pour éjecter du matériel d'enregistrement sur au moins un support et attachée à l'armature,
dans laquelle la méthode comprend les étapes suivantes
le contrôleur d'impression reçoit une image numérique destinée à être imprimée en éjectant le matériau d'enregistrement directement sur la surface plane,
le contrôleur d'impression détermine - avant l'impression de l'image numérique reçue - pour chaque zone non imprimable de la zone à plat qui est couverte par au moins une partie du matériau d'enregistrement éjecté lorsque l'image numérique est directement imprimée sur la zone à plat, un environnement comprenant la zone non imprimable, et
la tête d'impression éjecte le matériau d'enregistrement directement sur la surface plane en fonction de l'image numérique, sauf dans chaque environnement déterminé par le contrôleur d'impression.

11. Procédé selon la revendication 10, dans lequel une zone de non-impression parmi la pluralité de zones de non-impression comprend au moins un trou d'aspiration parmi une pluralité de trous d'aspiration, au moins une broche de repérage parmi une pluralité de broches de repérage, et/ou au moins une couture par laquelle deux parties de la surface plane sont assemblées.

12. Procédé selon la revendication 11, dans lequel le procédé comprend les étapes de sélection d'une carte numérique des zones non imprimantes dans la zone à plat et de superposition de la carte numérique avec l'image numérique afin de déterminer les environnements des zones non imprimantes.

13. Procédé selon l'une des revendications 10 à 12, dans lequel le procédé comprend l'étape d'imbrication automatique des images de l'au moins un travail d'impression en plaçant les images imbriquées de manière à minimiser le nombre de zones de non-impression qui coïncident avec des parties de contours des images imbriquées.

14. Support d'enregistrement non transitoire comprenant des instructions de code de programme exécutables par ordinateur qui, lorsqu'elles sont exécutées par un ordinateur, amènent l'ordinateur à exécuter la méthode selon l'une quelconque des revendications 10 - 13.
